(19) Europäisches Patentamt
European Patent Office
Office européen des brevets

(11) **EP 3 895 522 B1**

(12) **EUROPEAN PATENT SPECIFICATION**

(45) Date of publication and mention
of the grant of the patent:
**15.10.2025  Bulletin 2025/42**

(21) Application number: **19895267.3**

(22) Date of filing: **11.12.2019**

(51) International Patent Classification (IPC):
***A01G 9/24*** (2006.01)        ***A01G 20/30*** (2018.01)

(52) Cooperative Patent Classification (CPC):
**A01G 9/249; A01G 9/245; A01G 20/30**

(86) International application number:
**PCT/JP2019/048390**

(87) International publication number:
**WO 2020/122094 (18.06.2020 Gazette 2020/25)**

(54) **METHOD FOR CONTROLLING TEMPERATURE OF VEGETATION GROUND**

VERFAHREN ZUR REGELUNG DER TEMPERATUR EINES VEGETATIONSBODENS

PROCÉDÉ DE RÉGULATION DE LA TEMPÉRATURE D'UN SOL DE VÉGÉTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **14.12.2018  JP 2018234109**

(43) Date of publication of application:
**20.10.2021  Bulletin 2021/42**

(73) Proprietor: **SATO KOGYO CO., LTD.**
**Toyama-shi, Toyama 930-0082 (JP)**

(72) Inventors:
• **ORIMO, Toshiyasu**
**Tokyo 103-8639 (JP)**
• **KURODA, Chitose**
**Tokyo 103-8639 (JP)**
• **ISHIBASHI, Minoru**
**Tokyo 103-8639 (JP)**
• **SHINDO, Tatsunori**
**Tokyo 103-8639 (JP)**

(74) Representative: **Williams Powell**
**330 High Holborn**
**London WC1V 7QH (GB)**

(56) References cited:
JP-A- 2002 084 888      JP-A- 2002 084 888
JP-A- 2016 054 667      JP-A- H0 779 645
JP-A- H1 048 054        JP-A- H1 048 054
JP-A- H10 313 676       JP-B2- H 082 216
US-A1- 2001 035 468

**Description**

Technical Field

The present invention relates to a vegetation ground temperature controlling method in a case where growing is performed using grow lights (supplemental lighting for growth) particularly in a stadium or the like where turf is planted.

Background Art

In recent years, in soil in which turf is planted in a stadium such as, for example, a soccer stadium, a ground, or a golf course, pipes for circulating a heating medium are embedded in the ground for the purpose of reducing an influence on the turf due to lack of sunshine, a decrease in temperature due to seasons, a temporary decrease in temperature due to rainfall, nighttime, or the like, or an influence of turf roughness due to various competitions, snow cover, frost, snow removal, or the like, and an environment in which the turf is easily grown is artificially created to assist the growth of the turf.

In this case, the accuracy of the temperature control is important since it directly affects the growth of the turf. The present applicant has also developed a technique for achieving better temperature control (see, for example, Patent Literature 1 to 3).

However, in recent years, grow lights may be used to promote the growth of turf, and it has been found that, unexpectedly, the ground temperature rises due to the grow light and the accuracy of temperature control may decrease.

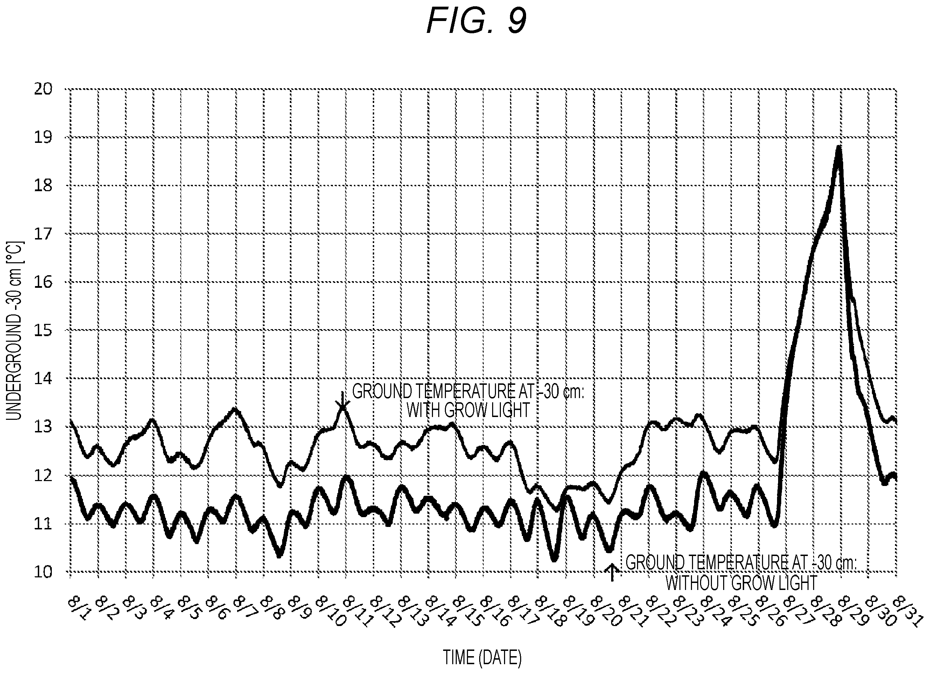

Fig. 9 is a result of measurement of the temperature at -30 cm of the ground by thermocouples in a shade zone of a stadium provided with an irradiation zone and a non-irradiation zone of grow lights (sodium lamps). The temperature in the grow light irradiation zone is higher than that in the non-irradiation zone by about 1 to 2°C, and it is expected that the accuracy of the temperature control decreases.

Use of grow lights is indispensable for growth of turf in a modern stadium in order to overcome insufficient sunlight due to weather or to reduce the influence of shade due to a roof of an audience seat, an openable roof, or the like, and it is necessary to reduce adverse effects on temperature control.

Citation List

Patent Literature

Patent Literature 1: JP 8-196140 A
Patent Literature 2: JP 10-48054 A
Patent Literature 3: JP 2002-84888 A

Summary of Invention

Technical Problem

Therefore, a main object of the present invention is to enable temperature control of a vegetation ground with higher accuracy when growth is performed using grow lights. Solution to Problem

A vegetation ground temperature controlling method that has solved the above problem is defined in claim 1 and described below.

<First aspect>

A vegetation ground temperature controlling method in which while irradiating a vegetation ground with light of a grow light from above, a temperature of a ground surface area is controlled by a temperature adjuster that is laid in the vegetation ground in an irradiation area of the grow light and performs at least one of heating and cooling, wherein the temperature of the ground surface area is determined by heat conduction analysis including weather data including outside air temperature and outside air humidity, and an irradiation plan and an amount of irradiation of the grow light as boundary conditions, and the temperature adjuster is controlled so that an underground temperature of the ground surface area becomes a target ground temperature while thermal conductivity of the ground is taken into consideration.

(Operation and effect)

As described above, in a case where the temperature of the ground surface area is controlled by the temperature adjuster laid in the vegetation ground in the irradiation area of the grow light, by performing the heat conduction analysis including the irradiation data of the grow light as the boundary condition, the temperature can be measured with higher accuracy, and thus, the temperature of the ground can be controlled with higher accuracy.

<Second aspect>

The vegetation ground temperature controlling method according to the first aspect, wherein

the weather data includes measurement data measured by an actinometer, and
while irradiating the vegetation ground with light of the grow light from above in a sunlight irradiation environment, the temperature of the ground surface area is controlled by the temperature adjuster that is laid in the vegetation ground in the irradiation area of the grow light.

(Operation and effect)

In an outdoor stadium, a stadium having an openable roof, or the like, under a sunlight irradiation environment, the vegetation ground is irradiated with light of the grow light from above for the purpose of supplemental light. In such a case, it is desirable that the heat conduction analysis be performed by including measurement data by an actinometer in weather data.

<Third aspect>

The vegetation ground temperature controlling method according to the first or second aspect, wherein

the vegetation ground is divided into a plurality of control zones, and the temperature adjuster is independently arranged in each control zone to enable temperature control of the ground surface area independently for each control zone,
the vegetation ground is irradiated with light of the grow light according to the irradiation plan so as to sequentially switch between an irradiation zone which is irradiated with light of the grow light and a non-irradiation zone which is not irradiated with light of the grow light within the control zone,
in the temperature control of the irradiation zone, the temperature control is performed based on the heat conduction analysis including the irradiation plan and the amount of irradiation of the grow light as a boundary condition, and
in the temperature control of the non-irradiation zone, the temperature control is performed based on the heat conduction analysis not including the irradiation plan of the grow light as the boundary condition or including the irradiation plan and the amount of irradiation of the grow light that has been corrected to an irradiation amount smaller than an irradiation amount in the irradiation zone as the boundary condition.

(Operation and effect)

When a large area of vegetation ground such as a stadium is irradiated with light of the grow lights, it is not impossible to install the grow lights across the entire vegetation ground. However, in general, in consideration of efficiency and economic efficiency, the vegetation ground is usually divided into a plurality of zones, and the irradiation zone which is irradiated with light of the grow lights and the non-irradiation zone which is not irradiated with light of the grow lights are sequentially switched to irradiate the vegetation ground with light of the grow lights. Therefore, in a case where the temperature control considering the grow light is performed in such a case, as in the present aspect, it is preferable that the irradiation data of the grow light be taken into consideration in the irradiation zone, and the irradiation data of the grow light be not taken into consideration in the non-irradiation zone, or even if it is taken into consideration, the irradiation data be corrected to an irradiation amount smaller than that in the irradiation zone so that the temperature control can be performed with higher accuracy.

<Fourth aspect>

The vegetation ground temperature controlling method according to any one of the first to the third aspects, wherein until a predetermined time elapses from a start of the irradiation of the grow light, the temperature control is performed based on heat conduction analysis which does not include the irradiation plan and the amount of irradiation of the grow light as boundary conditions, and after a lapse of the predetermined time to the end of the irradiation of the grow light, the temperature control is performed based on the heat conduction analysis which includes the irradiation plan and the amount of the irradiation of the grow light as boundary conditions.

<Fifth aspect>

The vegetation ground temperature controlling method according to any one of the first to fourth aspects, wherein the temperature adjuster supplies a heating medium in a pipe laid in the vegetation ground and performs the temperature control of the vegetation ground by controlling the heating medium supplied to the pipe.

Advantageous Effects of Invention

The present invention enables temperature control of a vegetation ground with higher accuracy when growth is performed using grow lights.

Brief Description of Drawings

Fig. 1 is a plan view of a soccer field.
Fig. 2 is a schematic view of a weather data measuring instrument unit.
Fig. 3 is a cross-sectional view of a field in which a pipe and a thermocouple are laid.
Fig. 4 is an overall control system view.
Fig. 5 is a view of a supply mode of a heating medium.
Fig. 6 is a ground structure view for explaining a method for identifying thermal conductivity.
Fig. 7 is an analysis model view.
Fig. 8 is a graph indicating a change in underground temperature (analysis value and actual measurement value) in a field of a stadium.
Fig. 9 is a graph indicating a change in underground temperature (actual measurement value) in a field of a stadium.

Description of Embodiments

[Configuration of vegetation ground, device, and the like]

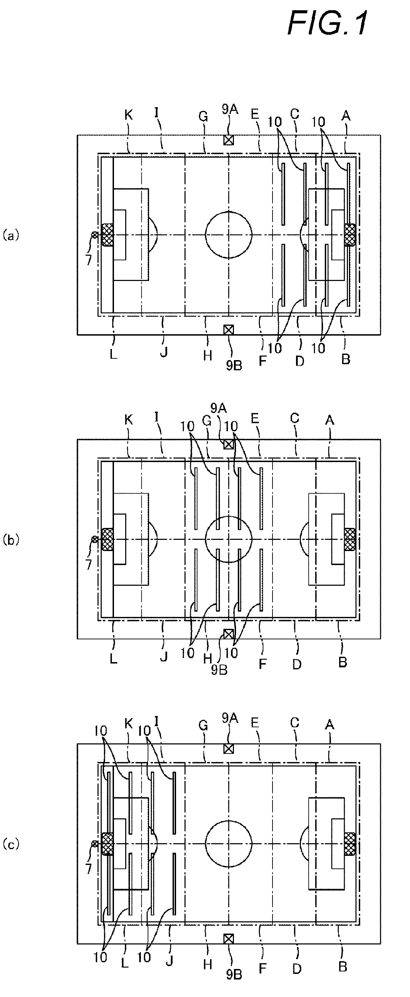

As described above, when a large area of vegetation ground such as a stadium is irradiated with light of grow lights, it is not impossible to install the grow lights across the entire vegetation ground. However, in general, in consideration of efficiency and economic efficiency, the vegetation ground is usually divided into a plurality of zones, and the irradiation zone which is irradiated with light of the grow lights and the non-irradiation zone which is not irradiated with light of the grow lights are sequentially switched to irradiate the vegetation ground with light of the grow lights. Thus, it is possible to efficiently promote the growth of vegetation in the vegetation ground while reducing the number of grow lights used. A known irradiation pattern of the grow light can be used without limitation. For example, in the case of the soccer field illustrated in Fig. 1, the soccer field is planarly divided into three simultaneous irradiation zones (control zones A to D, E to H, and I to L to be described later), and the change of the installation position of grow lights 10 in Figs. 1(a) to 1(c) is repeated as one cycle (the irradiation time in each simultaneous irradiation zone is 8 hours, and a total of 24 hours) according to an irradiation plan (timetable) shown in Table 1, so that the irradiation zone which is irradiated with light of the grow lights 10 and the non-irradiation zone which is not irradiated with light of the grow lights 10 can be sequentially switched to irradiate the vegetation ground with light of the grow lights 10.

[Table 1]

| | Zone | | | | | | | | | | | |
|---|---|---|---|---|---|---|---|---|---|---|---|---|
| | A | B | C | D | E | F | G | H | I | J | K | L |
| 0:00 - 1:00 | on | on | on | on | off | off | off | off | off | off | off | off |
| 1:00 - 2:00 | on | on | on | on | off | off | off | off | off | off | off | off |
| 2:00 - 3:00 | on | on | on | on | off | off | off | off | off | off | off | off |
| 3:00 - 4:00 | on | on | on | on | off | off | off | off | off | off | off | off |
| 4:00 - 5:00 | on | on | on | on | off | off | off | off | off | off | off | off |
| 5:00 - 6:00 | on | on | on | on | off | off | off | off | off | off | off | off |
| 6:00 - 7:00 | on | on | on | on | off | off | off | off | off | off | off | off |
| 7:00 - 8:00 | on | on | on | on | off | off | off | off | off | off | off | off |
| 8:00 - 9:00 | off | off | off | off | on | on | on | on | off | off | off | off |
| 9:00 - 10:00 | off | off | off | off | on | on | on | on | off | off | off | off |
| 10:00 - 11:00 | off | off | off | off | on | on | on | on | off | off | off | off |
| 11:00 - 12:00 | off | off | off | off | on | on | on | on | off | off | off | off |
| 12:00 - 13:00 | off | off | off | off | on | on | on | on | off | off | off | off |
| 13:00 - 14:00 | off | off | off | off | on | on | on | on | off | off | off | off |
| 14:00 - 15:00 | off | off | off | off | on | on | on | on | off | off | off | off |
| 15:00 - 16:00 | off | off | off | off | on | on | on | on | off | off | off | off |
| 16:00 - 17:00 | off | off | off | off | off | off | off | off | on | on | on | on |
| 17:00 - 18:00 | off | off | off | off | off | off | off | off | on | on | on | on |
| 18:00 - 19:00 | off | off | off | off | off | off | off | off | on | on | on | on |
| 19:00 - 20:00 | off | off | off | off | off | off | off | off | on | on | on | on |
| 20:00 - 21:00 | off | off | off | off | off | off | off | off | on | on | on | on |
| 21:00 - 22:00 | off | off | off | off | off | off | off | off | on | on | on | on |
| 22:00 - 23:00 | off | off | off | off | off | off | off | off | on | on | on | on |
| 23:00 - 0:00 | off | off | off | off | off | off | off | off | on | on | on | on |

As the grow lights 10, commercially available products such as those in which a large number of sodium lamps or LED lights are attached side by side on a stand so as to face downward can be used without particular limitation.

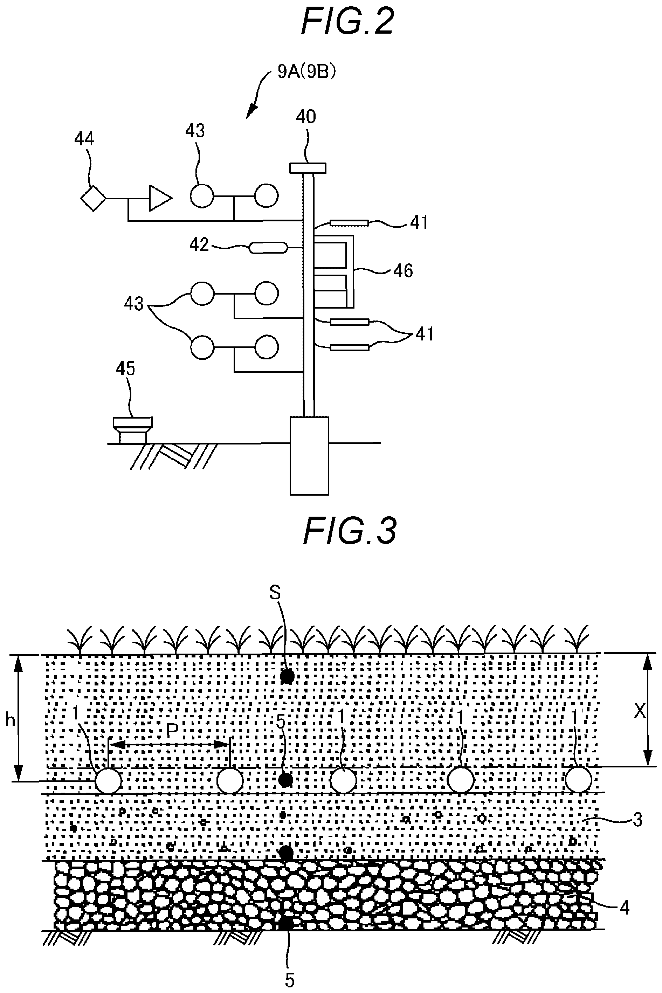

A temperature adjuster that performs at least one of heating and cooling is laid in the vegetation ground in the irradiation area of the grow lights 10. As the temperature adjuster, a known object such as of a heating wire type can be used without particular limitation. However, in terms of being applicable to both heating and cooling, it is preferable to supply the heating medium into pipes 1 laid in the vegetation ground as in the example illustrated in Fig. 3 and the like. The ground configuration of the field is not particularly limited, but, for example, on a soccer field, as illustrated in Fig. 3, management vehicles such as a sprinkler vehicle and a turf cutter vehicle come and go, and thus it is preferable that in order to prevent sinking or rutting of the ground and in consideration of drainage, the ground have a three-layer configuration including a fine sand layer 2, a coarse sand layer 3, and a gravel layer 4 from the upper layer side. The embedment depth of the pipes 1 for circulating the heating medium is not particularly limited. However, when the pipes 1 are embedded in the vicinity of the surface layer of the ground, they can be deformed or ruptured at the time of a surcharge load by the management vehicle or competitions such as a spear throw or a hammer throw. Therefore, it is desirable that the pipes 1 be embedded at a safe depth of several tens cm below the ground surface. Usually, a depth h from the ground surface to the pipe laying position can be approximately 15 to 35 cm, preferably about 25 to 30 cm. Further, in order to heat the entire control zone as uniformly as possible, it is desirable that the pipes 1 be laid so as to be laid in the same plane across the entire control zone. Further, it is desirable that an installation distance P of the pipes 1 be about 15 to 60 cm in a normal case.

The heating medium (referring to both a heat medium and a refrigerant) such as hot water or cold water having a predetermined temperature is supplied to and circulated through the pipes 1 by a heat source operation means, which is not illustrated. As another heating medium, for example, steam, a high-temperature gas, or the like can be used as a high-temperature heating medium, and a chlorofluorocarbon gas, brine, ammonia, or the like can be used as a low-temperature heating medium. The temperature of the heating medium supplied to the pipes 1 gradually increases or decreases due to heat exchange with the surrounding ground. However, the temperature of the heating medium can be recovered to the original reference temperature by providing an auxiliary heating medium tank in which a heating medium having a predetermined temperature is stored or providing a heating/cooling means for the heating medium such as a heating/-cooling coil in the middle of the flow paths of the laid pipes 1.

It is also possible to provide only one system of temperature adjusters for the entire field and perform temperature control on the entire soccer field in common. However, when the vegetation ground is irradiated with light of the grow lights 10 by sequentially switching between the irradiation zone which is irradiated with light of the grow lights 10 and the non-irradiation zone which is not irradiated with light of the grow lights 10, the influence of the grow lights 10 varies depending on the location of the field. Further, the influence of sunlight also varies depending on the location of the field. Therefore, as illustrated in Fig. 1, it is preferable that the vegetation ground be divided into a plurality of control zones A to L, and the temperature adjusters be independently arranged in the control zones A to L, so that the temperature of the ground surface area can be independently controlled for each of the control zones A to L. Thus, the simultaneous irradiation zone of the grow lights 10 is determined for one or more adjacent control zones, and temperature control can be independently performed in consideration of the presence or absence of irradiation of the grow lights for each simultaneous irradiation zone.

Further, in the ground depth direction, underground thermometers such as thermocouples 5 may be embedded at appropriate intervals for comparison with a calculated underground temperature and identification of the thermal conductivity in order to improve the analysis accuracy. In this case, the number of thermocouples 5 is set to, for example, two to three per zone corresponding to each of the zones A to L, and it is better not to embed the thermocouples 5 in a range of several tens of cm below the ground surface (ground surface area X) in consideration of a surcharge load by the management vehicle or competitions such as a spear throw or a hammer throw. Therefore, it is desirable that a plurality of thermocouples 5 be embedded at the same depth position as the pipes 1 and at a deeper position at appropriate intervals. In the illustrated example, a total of three thermocouples 5 are installed in the depth direction. Note that an optical fiber or the like may be used instead of the thermocouple 5.

Further, weather data measuring instrument units 9A and 9B are installed on the ground on the sides of the soccer field in order to measure various weather data. As illustrated, for example, in Fig. 2, the weather data measuring instrument unit 9A(9B) includes an actinometer 40, an outside air thermometer 41, an outside air hygrometer 42, an anemometer 43, an anemoscope 44, and a power source 46 attached to a pole erected on the ground, and it is desirable that a plurality of weather data measuring instrument units be installed on the sides of the soccer field so that both a sunlit portion and a shade portion can be measured although it depends on time. In the illustrated example, the weather data measuring instrument units 9A and 9B are installed on one side and the other side of the field, respectively, but the installation position is not limited thereto, but can be appropriately changed according to different conditions for each stadium. As the weather data measuring instrument, at least two types: the outside air thermometer 41 and the outside air hygrometer 42 are attached, and another measuring instrument is attached as necessary in relation to analysis formulae to be described later, such as considering a solar radiation amount. Note that a rain gauge 45 can be installed on the ground close to the weather data measuring instrument unit 9A(9B).

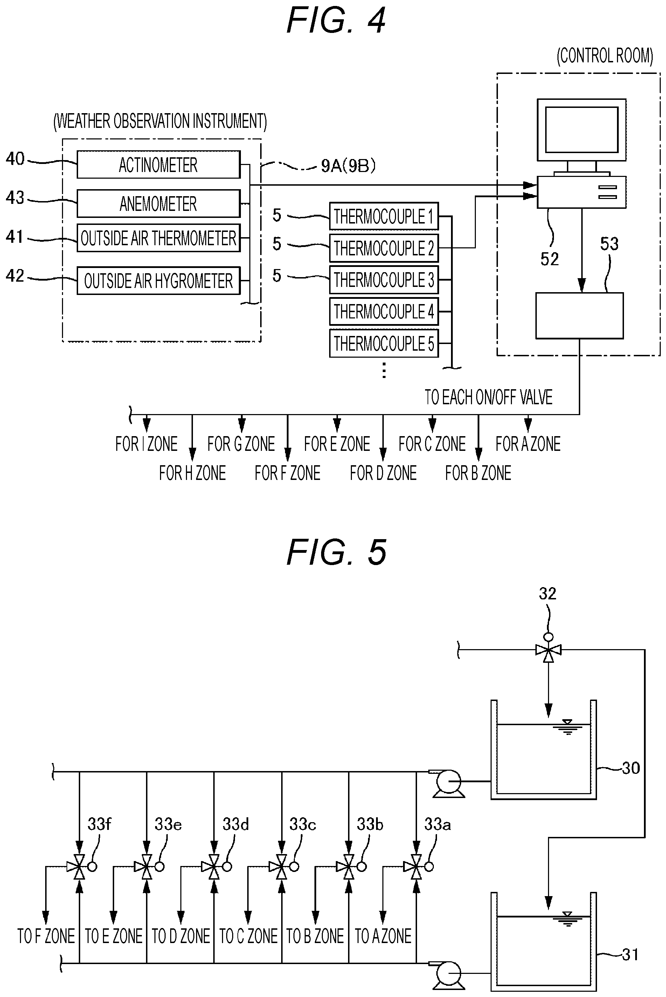

The system configuration for performing the temperature control is not particularly limited, but, for example, the system configuration illustrated in Fig. 4 can be adopted. That is, weather data measured by the weather data measuring instrument unit 9A (9B) and measurement data by the thermocouples 5 embedded in the ground are input to a control computer 52. Further, irradiation data (an irradiation plan and an irradiation amount) of the grow lights 10 is input in advance to the control computer 52. Based on these pieces of information, the control computer 52 obtains the underground temperature of the ground surface area X where the thermocouples 5 cannot be embedded by heat conduction analysis described later, and executes optimum control calculation described later based on this calculated underground temperature to prepare a water flow plan for each zone. Then, a controller 53 issues a command to a control valve that controls water flow to each zone based on the water flow plan.

For example, when the temperature control in the irradiation area of the grow lights 10 is performed, the temperature of the ground surface area is obtained by the heat conduction analysis including the weather data including the outside air temperature and the outside air humidity and the irradiation data of the grow lights 10 as boundary conditions, and the heating medium supplied to the pipes 1 can be controlled in consideration of the thermal conductivity of the ground so that the underground temperature of the ground surface area becomes a target ground temperature. In an outdoor stadium, a stadium having an openable roof, or the like, the heat conduction analysis can be performed by including measurement data by the actinometer 40 in the weather data as necessary, for example, in a case where the vegetation ground is irradiated with light of the grow lights 10 from above for the purpose of supplemental light under a sunlight irradiation environment.

When the vegetation ground is irradiated with light of the grow lights 10 by sequentially switching between the irradiation zone which is irradiated with light of the grow lights 10 and the non-irradiation zone which is not irradiated with light of the grow lights 10, the temperature adjusters are independently installed in each zone. In the temperature control of the irradiation zone, the temperature control can be performed based on the heat conduction analysis including the irradiation data of the grow lights 10 as a boundary condition, and in the temperature control of the non-irradiation zone, the temperature control can be performed based on the heat conduction analysis not including the irradiation data of the grow lights 10 as a boundary condition (alternatively, the irradiation data of the grow lights 10 corrected to an irradiation amount smaller than that in the irradiation zone may be included as a boundary condition). This enables temperature control with higher accuracy.

In addition to performing the control considering the grow lights 10 in the entire time zone from the start of irradiation to the end of irradiation of the grow lights 10, the control considering the grow lights 10 can also be performed only in a part of the time zone from the start of irradiation to the end of irradiation of the grow lights 10. For example, since the influence of the grow lights 10 is small until a predetermined time elapses from the start of irradiation of the grow lights 10, the control considering the grow lights 10 is not performed, and the control considering the grow lights 10 can be performed after a lapse of a predetermined time to the end of the irradiation of the grow lights 10.

As described above, the temperature control is not particularly limited except that the temperature control is performed in consideration of the influence of the grow lights 10, and the influence of the grow lights 10 can also be considered in the temperature control described, for example, in Patent Literature 1 to 3.

For example, in the temperature control described in Patent Literature 3, the following is obtained when the influence of the grow lights 10 is taken into consideration. That is, when the temperature control of the vegetation ground is started, a virtual heat conduction analysis is executed according to the time history from the past predetermined time to the present based on past measurement data and the irradiation data of the grow lights 10 stored in the control computer 52, the obtained temperature of the ground surface area at the present time is set as the initial temperature condition of the ground surface area X at the time of starting the temperature control, thereafter, the temperature of the ground surface area X in which the thermocouples 5 are not embedded is obtained by the heat conduction analysis using the weather data measured by the weather data measuring instrument and the irradiation data of the grow lights 10 as boundary conditions, and the heating medium supplied to the pipes 1 can be controlled in consideration of the thermal conductivity of the ground such that the underground temperature of the ground surface area X becomes the target ground temperature.

In this case, the measurement of the weather data by the weather data measuring instrument units 9A and 9B is performed regularly or several days before start of the ground temperature control, specifically, two to five days before, in addition to performing the ground temperature control, and it is necessary to store the measured weather data in the control computer 52. Similarly, it is necessary to store the past irradiation data of the grow lights in the control computer 52.

An analysis/control method of an application example to the temperature control described in Patent Literature 3 will be described below in more detail. A person skilled in the art would be able to easily understand a change when applying to another temperature control from the description described below.

[Step 1]... Virtual heat conduction analysis

(Measurement of weather data)

At least several days (for example, three days) before the start of the control, various weather observation data obtained by the weather data measuring instrument unit 9A(9B) and an underground temperature data measured by the embedded thermocouples 5 are stored in the control computer 52.

(Virtual ground temperature calculation of the ground surface area X)

Based on the past weather data, underground temperature data, and irradiation data of the grow lights 10 stored in the control computer 52, the temperature in the ground is numerically calculated for each of the zones A to L according to a time history from a past predetermined time (for example, three days before) to the present by using the heat conduction analysis.

(Analysis equation)

A two-dimensional heat conduction equation is indicated in an equation (1) below.
[Math. 1]

$$\rho C \frac{\partial T}{\partial t} = \frac{\partial}{\partial x}\left[k\frac{\partial T}{\partial x}\right] + \frac{\partial}{\partial y}\left[k\frac{\partial T}{\partial y}\right] + q \quad \cdots \quad (1)$$

As the two-dimensional heat conduction equation, a basic equation of heat transfer analysis is used. Here, T represents temperature, $\rho$, C, and $\kappa$ represent density, constant pressure specific heat, and thermal conductivity of a ground material, respectively, and q means a term of generation of heat per unit volume. In order to solve the above equation (1), the boundary conditions described below are required.
[Math. 2]

$$T(x,y,t) = \hat{T}(x,y,t) \quad on \quad \Gamma_1 \quad \cdots \quad (2)$$

[Math. 3]

$$k \left( \frac{\partial T}{\partial x} n_x + \frac{\partial T}{\partial y} n_y \right) = \hat{Q}(x,y,t) \quad on \quad \Gamma_2 \qquad \cdots (3)$$

Here, T^ (note; ^ is denoted immediately above) represents the temperature given at boundary $\Gamma_1$ and Q^ represents the flux of heat given at boundary $\Gamma_2$.

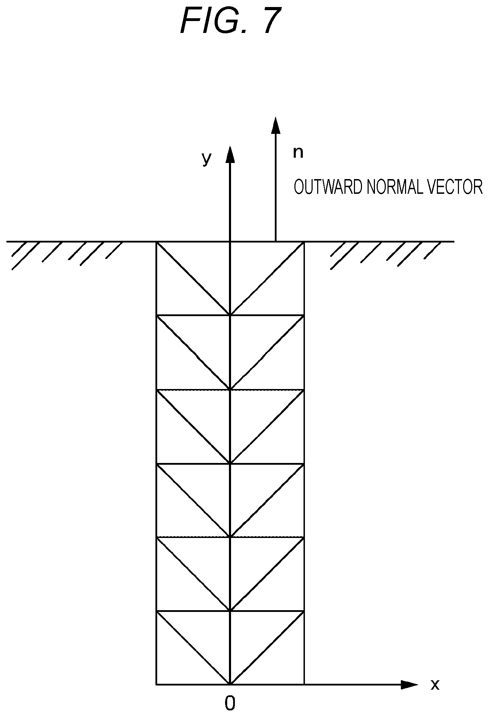

$n_x$ and $n_y$ mean components of an outward normal vector with respect to $\Gamma_2$. Considering the analysis area as illustrated in Fig. 7, $n_x = \cos(n, x) = \cos 90° = 0$, $n_y = \cos(n, y) = \cos 0° = 1$, and thus the above equation (3) becomes an equation (4) below.

[Math. 4]

$$k \left( \frac{\partial T}{\partial x} n_x + \frac{\partial T}{\partial y} n_y \right) = k \frac{\partial T}{\partial y} \qquad \cdots (4)$$

The heat flux at the boundary $\Gamma_2$ can be calculated by a heat balance equation.

A method for calculating the boundary conditions from the heat balance equation will be described below in detail. First, the heat balance equation is indicated by an equation (5) below.

[Math. 5]

$$-\lambda \left( \frac{\partial T}{\partial y} \right) = \hat{Q}(x,y,t)$$
$$= a \cdot TH + a_{GL} \cdot TH_{GL} + \varepsilon(AH - \sigma Ts^4) + \alpha_c(Ta - Ts)$$
$$+ K \frac{\alpha_c}{Ca}(Xa - Xss)L$$
$$\cdots (5)$$

where Ts: ground surface temperature a: solar absorptivity TH: solar radiation amount $\varepsilon$: radiation emissivity AH-$\sigma$Ts$^4$: Atmospheric radiation amount $\alpha_c$: surface heat conductivity Ta: outside air temperature K: moisture evaporation ratio Ca: wet specific heat of air L: latent heat of vaporization of water Xa: outside air absolute humidity Xss: absolute humidity at saturation at ground surface temperature $a_{GL}$: irradiation coefficient of grow light $TH_{GL}$: grow light irradiation amount

In the above equation (5), the left side represents a thermal conduction term, the first term on the right side represents solar radiation absorption heat, the second term represents absorption heat of a grow light, the third term represents long-wavelength radiation balance, the fourth term represents convective heat transfer, and the fifth term represents latent heat of vaporization. In this case, for each parameter, a practical numerical value is defined by actual measurement and existing documents. Note that, in the heat balance equation, $T_S$ (ground surface temperature) is not a measurement value, but a calculated temperature obtained by a previous heat conduction analysis is substituted and calculation is performed.

(a) Solar absorptivity; a

According to an existing document, a = 0.66 for dry turf and a = 0.75 for wet turf.

(b) Solar radiation amount; TH

The solar radiation amount includes a direct solar radiation amount due to direct sunlight and a radiative sky solar radiation amount, both of which are given as the solar radiation amount in the sun, and only the diffuse solar radiation amount is given in the shade. Therefore, as described above, the weather observation data of a sunlit portion and a shaded portion are selectively used by the two weather data measuring instrument units 9A and 9B.

(c) Radiation emissivity; $\varepsilon$

According to an existing document, $\varepsilon = 0.93$.

(d) Atmospheric radiation amount; $AH-\sigma Ts^4$

According to an existing document, it is obtained by an equation (6) below.
[Math. 6]

$$AH-\sigma Ts^4 = 4.88 \left[ \frac{273.16+t_0}{100} \right]^4 \cdot (1-0.062C_T) \cdot \left[ 0.49-2.1 \sqrt{\frac{x}{x+622}} \right]$$

$$\cdots (6)$$

where $t_0$; outside air temperature (°C), $C_T$; total cloud cover (dimensionless number of 0 to 10 indicated in a fraction of tenths), and x; outside air absolute humidity (g/kg). Note that for $t_0$, an actual measurement outside air temperature is used, and x is obtained by converting an actual measurement value measured by a hygrometer. Further, $C_T$ can be predicted by a sunshine rate SD (sunshine time/sunlight time) according to an existing document, and is obtained by an equation (7) below.
[Math. 7]

$$C_T = 9.8 - (10.5 - 5.6 \cdot sinH_h) \cdot SD\frac{2}{h}$$

$$SD_{\bar{h}} = \frac{SD_h + SD_{h+1}}{2} \qquad \cdots (7)$$

Here, $H_h$ is solar altitude (degree). Further, since h + 1 indicates one hour later, $C_T$ is an instantaneous value at every hour on the hour. Further, at night, linear interpolation is performed between immediately before sunset and immediately after sunrise.

(e) Surface heat conductivity; $\alpha_c$

According to an existing document, it is calculated from a wind velocity $V_h$ at an arbitrary height h by an equation (8) below. Note that it is assumed that a wind velocity exponent is 0.25.
[Math. 8]

$$\alpha_c = 3 \left[ 1 + \frac{V_h}{\left[\frac{h}{8}\right]^{0.25}} \right] \left( W/m^2°C \right)$$

$$= 2.58 \left[ 1 + \frac{V_h}{\left[\frac{h}{8}\right]^{0.25}} \right] (Kcal/m^2h°C) \cdots (8)$$

(f) Moisture evaporation ratio; K

According to an existing document, K: 0.1 to 0.2 (it is considered that evaporation occurs at a ratio of K in the precipitation amount).

(g) Wet specific heat of air; Ca

According to an existing document, Ca = 0.501 kcal/kg°C in the case of water vapor, and Ca = 0.241 kcal/kg°C in the case of air.

(h) Latent heat of vaporization of water; L

According to an existing document, L = 597.5 kcal/kg.

(i) Grow light irradiation coefficient; $a_{GL}$

By setting the grow light irradiation coefficient $a_{GL}$ to 1 when the grow light is on (irradiation) and to 0 or a numerical value close to 0 when the grow light is off (non-irradiation), the irradiation data of the grow light is taken into consideration in the irradiation zone, and the irradiation data of the grow light is not taken into consideration in the non-irradiation zone, or even if it is taken into consideration, the irradiation data of the grow light is corrected to an irradiation amount smaller than that in the irradiation zone and taken into consideration.

(j) Grow light irradiation amount; $TH_{GL}$

The grow light irradiation amount $TH_{GL}$ can be set according to the light amount of the grow lights arranged for each zone.
Incidentally, when solar radiation is considered in the heat balance equation of the ground surface, the degree of influence of each parameter is in the order of solar radiation absorption heat > absorption heat of grow light > long-wavelength radiation balance > convective heat transfer > latent heat of vaporization, and it is always necessary to consider at least the solar radiation absorption heat, which is the first term on the right side, and the long-wavelength radiation balance, which is the second term. However, for example, the convective heat transfer, which is the third term, can be omitted under a condition that the influence of wind crawling on the ground is small like a stadium surrounded by a roof. Further, when high accuracy is not required, the latent heat of vaporization, which is the fourth term, can be ignored. Therefore, in the case of a heat balance equation in which two parameters: the solar radiation absorption heat, which is the first term on the right side, and the long-wavelength radiation balance, which is the second term, are considered, three items: the solar radiation amount, the outside air temperature, and the outside air humidity are sufficient as the weather observation data. Further, in the case of an indoor stadium with little solar radiation, it is not necessary to consider the solar radiation absorption heat, and in that case, two items: the outside air temperature and the outside air humidity are sufficient as the weather observation data.
Note that, in the virtual heat conduction analysis, since the temperature at the position where the thermocouples 5 are embedded is known by measurement, it is possible to improve the calculation accuracy by substituting the measured temperature into the node position on an analytical model.
On the other hand, the initial condition is given by an equation (9) below.
[Math. 9]

$$T(x,y,0) = T_0(x,y) \quad \cdots (9)$$

By applying a usual Galerkin method to the basic equation and discretizing the variables with three-node triangular elements, a finite element equation described below is obtained.
[Math. 10]

$$\left[ M_{\alpha\beta} + \frac{\Delta t}{2} S_{\alpha\beta} \right] T_\beta^{n+1}$$

$$= \left[ M_{\alpha\beta} - \frac{\Delta t}{2} S_{\alpha\beta} \right] T_\beta^n + \Delta t \, \hat{\Omega}_\alpha^{n+1} \quad \cdots (10)$$

Here, $M\alpha\beta$, $S\alpha\beta$, and $\Omega\alpha$ (note; $\alpha$ and $\beta$ are subscripts) indicate a mass matrix, a diffusion matrix, and a flux vector, respectively, and $\Delta t$ is a minute time increment. The Crank-Nicolson method is adopted for discretization in the time direction.

By the above virtual heat conduction analysis, the temperature of the ground surface area X at the current time is obtained by calculation.

[Step 2]... Heat conduction analysis

As a result of the above virtual heat conduction analysis, the obtained temperature of the ground surface area X is set as the boundary condition of the ground surface area X at the time of start of the temperature control, and thereafter, the temperature of the ground surface area X can be obtained by performing the heat conduction analysis using the weather data of the actinometer, the outside air thermometer, the outside air hygrometer, and the irradiation data of the grow lights 10 as the boundary conditions at predetermined time intervals, for example, two to three hours. The heat conduction analysis can be performed by a calculation method similar to that of the virtual heat conduction analysis.

[Step 3]... Planning of water flow plan by optimum control calculation

As described above, since the ground temperature of the ground surface area X whose temperature cannot be directly measured can be grasped by the procedure up to Step 2, as the next procedure, an adjustment plan of the temperature adjuster, that is, a water flow plan of the heating medium supplied to the pipes 1 in this example is made so that an attention point S (see Fig. 3; a point several cm below the ground surface where temperature management is important for growth of turf) set in the ground surface area X becomes the target temperature.

(Control management of the heating medium)

In the present example, based on the calculation result of the ground temperature of the ground temperature control target area described above, spatial and temporal temperature changes are grasped while considering the thermal conductivity of the ground by, for example, a finite element method, and the ground temperature is controlled by obtaining a pipe water flow temperature (heating medium temperature) so as to minimize the difference between the target temperature and the calculated temperature at the attention point S. Therefore, it is possible to control the surface area of the ground having the largest influence on the growth of turf to an appropriate temperature environment. As a heat source supply control in this case, by alternately supplying a high-temperature heating medium and a low-temperature heating medium at predetermined time intervals, the control becomes easy and practical.

In supplying the heating medium, cold water and hot water can be alternately produced for each section by a heat pump, but as illustrated in Fig. 5, a hot water tank 30 for storing hot water on a high temperature side (a temperature) and a cold water tank 31 for storing cold water on a low temperature side (b temperature) are separately prepared, and the hot water tank 30 and the cold water tank 31 are switched by switching control valves 32, 33a, 33b..., so that the hot water or the cold water having a constant temperature can be quickly and easily supplied at predetermined time intervals without control delay. Further, it is also possible to prepare only one of the hot water tank 30 or the cold water tank 31 depending on the seasons and perform the one-stage control. Specifically, only the cold water tank 31 is prepared in a summertime, and the operation of supplying the cold water from the cold water tank 31 for a predetermined time and then stopping the supply of the cold water for a while is repeatedly performed, whereby the ground is cooled when the cold water is supplied and the ground temperature is warmed to a normal temperature by stopping the supply, and the ground temperature in the vicinity of the ground surface can be changed in a periodic function curve shape. Conversely, only the hot water tank 30 is prepared in a winter season, and the operation of supplying the hot water from the hot water tank 30 for a predetermined time and then stopping the supply of the hot water for a while is repeatedly performed, whereby the ground temperature in the vicinity of the ground surface can be changed in a periodic function curve shape.

In such hot water or cold water supply control, it is also possible to improve control responsiveness (responsiveness of heat exchange) by adjusting the supply amount using an inverter pump while considering a load of an external condition.

[Identification of physical property values (thermal conductivity)]

Next, a method for identifying the thermal conductivity will be indicated. In identifying the thermal conductivity, it is easy to collect a sample and determine the thermal conductivity by an indoor experiment, but it is difficult to say that the thermal conductivity at the original position is accurately represented due to unevenness of the ground and uncertainty of the water content. Further, since the thermal conductivity also changes with the water-containing state in the ground, it is necessary to calibrate the thermal conductivity in a timely manner in order to improve the analysis accuracy.

For example, irregularly or periodically temporarily, an underground thermometer is installed in the ground surface area X or an area in the vicinity thereof, and the actual measurement underground temperature measured by the underground thermometer is compared with the calculated underground temperature at the position of embedment of the underground thermometer obtained by the heat conduction analysis using the weather data measured by the weather data measuring instrument as a boundary condition, and the thermal conductivity can be corrected so as to reduce the residual (first method). Further, a thermal conductivity calibration thermocouple 7 is embedded in a ground surface area other than a conditional area where the underground thermometer cannot be embedded or an area in the vicinity thereof, specifically, in a turf area that is not damaged by competitions such as behind a goal post in the example of a soccer field as illustrated in Fig. 1, and the actual measurement underground temperature measured by the thermal conductivity calibration thermocouple 7 is compared with the calculated underground temperature at the position of embedment of the underground thermometer obtained by the heat conduction analysis using the weather data measured by the weather data measuring instrument as a boundary condition, and the thermal conductivity can be corrected so as to reduce the residual (second method).

In identifying these thermal conductivities, the estimation of the thermal conductivity is treated as an inverse problem, and a method of identification using a nonlinear least-squares method is used. That is, the thermal conductivity is obtained by minimizing the residual between the calculated value and the measurement value at the position corresponding to the observation point using the time history of the temperature observed in the ground. In this case, the Gauss-Newton method is used to minimize the residual sum of squares of the calculated value and the observation value, i.e., the evaluation function.

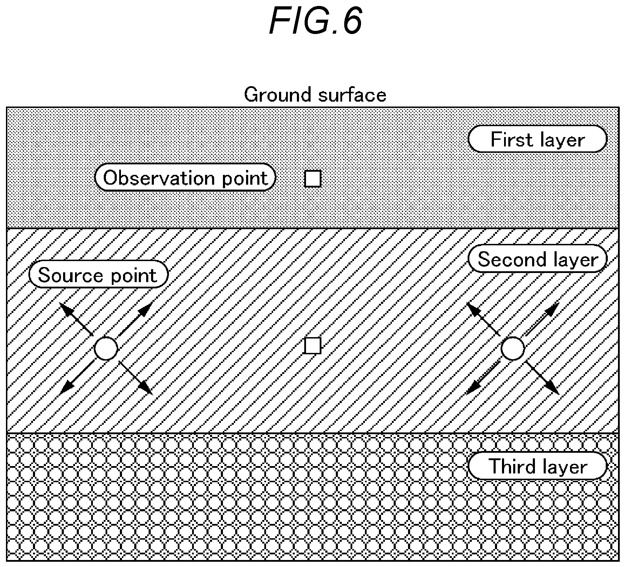

As illustrated in Fig. 6, it is assumed that the ground structure includes several layers (partial areas) and the thermal conductivity in each layer is constant. The thermal conductivity can be generally expressed in an equation (11) below.

[Math. 11]

$$k_\lambda{}^{\mathrm{T}} = \{k_1, k_2, k_3, \cdots, k_n\} \quad \cdots \quad (1\,1)$$

Here, $\lambda$ represents the number of thermal conductivity corresponding to a partial area, and n is the total number of partial areas.

Further, the temperature at the observation point provided in the analysis area is expressed as described below.

[Math. 12]

$$\widetilde{T}_\mu(t)^{\mathrm{T}} = \left\{\widetilde{T}_1(t), \widetilde{T}_2(t), \widetilde{T}_3(t), \cdots, \widetilde{T}_m(t)\right\} \quad \cdots \quad (1\,2)$$

Here, ~ means an observation value, $\mu$ indicates the number of observation points, and m indicates the total number of observation points. Similarly, the calculated values at the nodes corresponding to the observation points 1 to m are indicated as described below.

[Math. 13]

$$T_\mu(t, k_\lambda)^{\mathrm{T}}$$

$$= \{T_1(t, k_\lambda), T_2(t, k_\lambda), T_3(t, k_\lambda), \cdots, T_m(t, k_\lambda)\}$$

$$\cdots \quad (1\,3)$$

The evaluation function for obtaining the thermal conductivity is expressed by the residual sum of squares of the observed temperature and the calculated value of the corresponding temperature as described below.

[Math. 14]

$$J(k_\lambda) = \frac{1}{2} \int_{t_0}^{t_f} \left\{\widetilde{T}_\mu(t) - T_\mu(t, k_\lambda)\right\}^{\mathrm{T}} \left\{\widetilde{T}_\mu(t) - T_\mu(t, k_\lambda)\right\} dt$$

$$\cdots \quad (1\,4)$$

Here, $t_0$ and $t_f$ indicate a calculation start time and a calculation end time, respectively. As can be seen from this equation, since the evaluation function is a function of thermal conductivity $k_\lambda$, an optimum thermal conductivity $k_\lambda$ can be obtained by minimizing the equation (14) by, for example, the Gauss-Newton method.

Further, the sensitivity matrix of each parameter is obtained by a sensitivity equation method.

[Math. 15]

$$\left[M_{\alpha\beta}+\frac{\Delta t}{2}S_{\alpha\beta}\right]\frac{\partial T_{\beta}^{n+1}}{\partial k_{\lambda}}=\left[M_{\alpha\beta}-\frac{\Delta t}{2}S_{\alpha\beta}\right]\frac{\partial T_{\beta}^{n}}{\partial k_{\lambda}}$$

$$-\frac{\Delta t}{2}\frac{\partial S_{\alpha\beta}}{\partial k_{\lambda}}(T_{\beta}^{n+1}+T_{\beta}^{n})+\Delta t\frac{\partial \hat{\Omega}_{\alpha}^{n+1}}{\partial k_{\lambda}} \quad \cdots (15)$$

An increment value $\Delta k_{\lambda}^{i}$ can be obtained by equations (16) and (17) below.

[Math. 16]

$$\frac{\partial J(k_{\lambda}^{i}+\Delta k_{\lambda}^{i})}{\partial k_{\lambda}}$$

$$=\int_{t_{0}}^{t_{f}}\left[\frac{\partial T_{\mu}}{\partial k_{\lambda}}\right]^{T}\left\{\widetilde{T}_{\mu}(t)-T_{\mu}(t,k_{\lambda}^{i})-\frac{\partial T_{\mu}}{\partial k_{\lambda}}\Delta k_{\lambda}^{i}\right\}dt=0$$

$$\cdots (16)$$

[Math. 17]

$$\Delta k_{\lambda}^{i}=\left(\int_{t_{0}}^{t_{f}}\left[\frac{\partial T_{\mu}}{\partial k_{\lambda}}\right]\left[\frac{\partial T_{\mu}}{\partial k_{\omega}}\right]^{T}dt\right)^{-1}$$

$$\left(\int_{t_{0}}^{t_{f}}\left[\frac{\partial T_{\mu}}{\partial k_{\omega}}\right]\left\{\widetilde{T}_{\mu}(t)-T_{\mu}(t,k_{\lambda}^{i})\right\}dt\right) \quad \cdots (17)$$

The thermal conductivity of each area can be obtained by the above procedure.

Example

On the field of an actual stadium having a configuration of the above-described vegetation ground, device, and the like, the underground temperature at a depth of 5 cm below the ground surface based on the heat conduction analysis (A) below was obtained while irradiating with light of a grow light (sodium lamp) in the pattern of Table 1, and temperature control was performed while considering the thermal conductivity of the ground so that the underground temperature became a target ground temperature. Further, at the same time, results of the heat conduction analysis (B) were also obtained. Further, the thermocouple was installed at a depth of 5 cm below the ground surface, and the temperature was actually measured.

(A) A case where the heat conduction analysis is performed every three hours using weather data of the actinometer, the outside air thermometer, and the outside air hygrometer, and irradiation data of the grow light as boundary conditions (analysis value: grow light taken into consideration).
(B) A case where the heat conduction analysis is performed every three hours using weather data of the actinometer, the outside air thermometer, and the outside air hygrometer as boundary conditions without irradiation data of the grow light as a boundary condition (analysis value: grow light not taken into consideration).

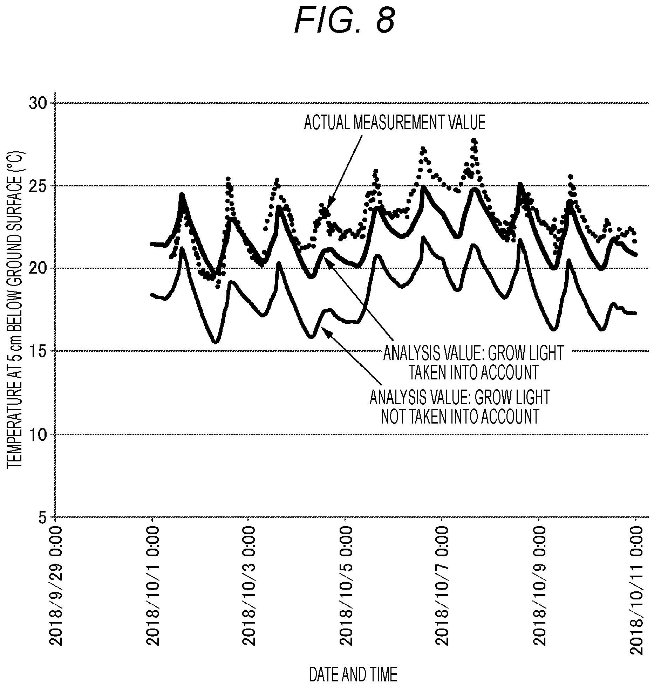

Fig. 8 illustrates graphs of a temperature analysis value by the heat conduction analysis (A), a temperature analysis value by the heat conduction analysis (B), and an actual measurement value. As is apparent from this result, when the influence of the grow light is not taken into consideration, the temperature analysis value is different from the actual measurement value by about five degrees at the maximum. On the other hand, when the influence of the grow light is taken into consideration, it is possible to obtain a temperature analysis value extremely close to the actual measurement value. Therefore, it has been found that the temperature of the vegetation ground can be controlled with higher accuracy by obtaining the underground temperature based on the heat conduction analysis in consideration of the influence of the grow light and performing the temperature control while considering the thermal conductivity of the ground so that the underground temperature becomes the target ground temperature.

Industrial Applicability

The vegetation ground temperature controlling method of the present invention is suitable for a natural turf ground in a sports stadium such as a soccer stadium, a baseball stadium, or a golf course, but is not limited thereto, and can also be used for other vegetation grounds in other places.

Reference Signs List

| 1 | pipe |
|---|---|
| 2 | fine sand layer |
| 3 | coarse sand layer |
| 4 | gravel layer |
| 5 | thermocouple |
| 7 | thermal conductivity calibration thermocouple |
| 9A, | 9B weather data measuring instrument unit |
| 10 | grow light |
| 30 | hot water tank |
| 31 | cold water tank |
| 32, 33a to 33f | switching control valve |
| 40 | actinometer |
| 41 | outside air thermometer |
| 42 | outside air hygrometer |
| 43 | anemometer |
| 44 | anemoscope |
| 45 | rain gauge |

**Claims**

1.   A vegetation ground temperature controlling method, comprising:

controlling a temperature of a ground surface area by a temperature adjuster that is laid in the vegetation ground in an irradiation area of the grow light and performs at least one of heating and cooling, while irradiating a vegetation ground with light of a grow light from above, wherein
the temperature of the ground surface area is determined by heat conduction analysis including weather data including outside air temperature and outside air humidity, and an irradiation plan and an amount of irradiation of the grow light as boundary conditions, and the temperature adjuster is controlled so that an underground temperature of the ground surface area becomes a target ground temperature while thermal conductivity of the ground is taken into consideration.

2.   The vegetation ground temperature controlling method according to claim 1, wherein

the weather data includes measurement data measured by an actinometer, and
while irradiating the vegetation ground with light of the grow light from above in a sunlight irradiation environment, the temperature of the ground surface area is controlled by the temperature adjuster that is laid in the vegetation ground in the irradiation area of the grow light.

3.   The vegetation ground temperature controlling method according to claim 1 or 2, wherein

the vegetation ground is divided into a plurality of control zones, and the temperature adjuster is independently arranged in each control zone to enable temperature control of the ground surface area independently for each control zone,

the vegetation ground is irradiated with light of the grow light according to the irradiation plan so as to sequentially switch between an irradiation zone which is irradiated with light of the grow light and a non-irradiation zone which is not irradiated with light of the grow light within the control zone,

in the temperature control of the irradiation zone, the temperature control is performed based on the heat conduction analysis including the irradiation plan and the amount of irradiation of the grow light as a boundary condition, and

in the temperature control of the non-irradiation zone, the temperature control is performed based on the heat conduction analysis not including the irradiation plan of the grow light as the boundary condition or including the irradiation plan and the amount of the irradiation of the grow light that has been corrected to an irradiation amount smaller than an irradiation amount in the irradiation zone as the boundary condition.

4. The vegetation ground temperature controlling method according to any preceding claim, wherein

until a predetermined time elapses from a start of the irradiation of the grow light, the temperature control is performed based on heat conduction analysis which does not include the irradiation plan and the amount of irradiation of the grow light as boundary conditions, and

after a lapse of the predetermined time to the end of the irradiation of the grow light, the temperature control is performed based on the heat conduction analysis which includes the irradiation plan and the amount of the irradiation of the grow light as boundary conditions.

5. The vegetation ground temperature controlling method according to any preceding claim, wherein the temperature adjuster supplies a heating medium in a pipe laid in the vegetation ground and performs the temperature control of the vegetation ground by controlling the heating medium supplied to the pipe.

**Patentansprüche**

1. Verfahren zur Regelung einer Temperatur eines Vegetationsbodens, umfassend:

Steuern einer Temperatur eines Bodenoberflächenbereichs durch einen Temperatureinsteller, der in den Vegetationsboden in einem Bestrahlungsbereich des Wachstumslichts gelegt wird und mindestens eines von Heizen und Kühlen durchführt, während ein Vegetationsboden mit Licht eines Wachstumslichts von oben bestrahlt wird, wobei

die Temperatur des Bodenoberflächenbereichs durch eine Wärmeleitungsanalyse bestimmt wird, die Wetterdaten, einschließlich der Außenlufttemperatur und der Außenluftfeuchtigkeit, und einen Bestrahlungsplan und eine Bestrahlungsmenge des Wachstumslichts als Randbedingungen umfasst, und der Temperatureinsteller so geregelt wird, dass eine Untergrundtemperatur des Bodenoberflächenbereichs eine Zielbodentemperatur wird, während die Wärmeleitfähigkeit des Bodens berücksichtigt wird.

2. Verfahren zur Regelung der Temperatur des Vegetationsbodens nach Anspruch 1, wobei die Wetterdaten Messdaten umfassen, die von einem Aktinometer gemessen werden, und während des Bestrahlens des Vegetationsbodens mit Licht des Wachstumslichts von oben in einer Sonnenlichtbestrahlungsumgebung die Temperatur des Bodenoberflächenbereichs durch den Temperatureinsteller geregelt wird, der in den Vegetationsboden im Bestrahlungsbereich des Wachstumslichts gelegt wird.

3. Verfahren zur Regelung der Temperatur des Vegetationsbodens nach Anspruch 1 oder 2, wobei

der Vegetationsboden in eine Vielzahl von Regelzonen unterteilt ist und der Temperatureinsteller unabhängig in jeder Regelzone angeordnet ist, um eine Temperaturregelung des Bodenoberflächenbereichs unabhängig für jede Regelzone zu ermöglichen,

der Vegetationsboden mit Licht des Wachstumslichts gemäß dem Bestrahlungsplan bestrahlt wird, um sequentiell zwischen einer Bestrahlungszone, die mit Licht des Wachstumslichts bestrahlt wird, und einer Nichtbestrahlungszone, die nicht mit Licht des Wachstumslichts bestrahlt wird, innerhalb der Regelzone zu wechseln,

bei der Temperaturregelung der Bestrahlungszone die Temperaturregelung auf der Grundlage der Wärmeleitungsanalyse unter Einbeziehung des Bestrahlungsplans und der Bestrahlungsmenge des Wachstumslichts als Randbedingung durchgeführt wird, und
bei der Temperaturregelung der Nicht-Bestrahlungszone die Temperaturregelung auf der Grundlage der Wärmeleitungsanalyse durchgeführt wird, die den Bestrahlungsplan des Wachstumslichts nicht als Randbedingung einschließt oder den Bestrahlungsplan und die Bestrahlungsmenge des Wachstumslichts einschließt, das auf eine Bestrahlungsmenge korrigiert wurde, die kleiner ist als eine Bestrahlungsmenge in der Bestrahlungszone, als Randbedingung.

4.  Verfahren zur Regelung der Temperatur des Vegetationsbodens nach einem der vorhergehenden Ansprüche, wobei bis zum Ablauf einer vorbestimmten Zeit ab einem Beginn der Bestrahlung des Wachstumslichts die Temperaturregelung auf der Grundlage einer Wärmeleitungsanalyse durchgeführt wird, die den Bestrahlungsplan und die Bestrahlungsmenge des Wachstumslichts als Randbedingungen nicht einschließt, und nach Ablauf der vorbestimmten Zeit bis zum Ende der Bestrahlung des Wachstumslichts die Temperaturregelung auf der Grundlage der Wärmeleitungsanalyse durchgeführt wird, die den Bestrahlungsplan und die Bestrahlungsmenge des Wachstumslichts als Randbedingungen einschließt.

5.  Verfahren zur Regelung der Temperatur des Vegetationsbodens nach einem der vorhergehenden Ansprüche, wobei der Temperatureinsteller ein Heizmedium in ein im Vegetationsboden verlegtes Rohr einspeist und die Temperaturregelung des Vegetationsbodens durch Regelung des dem Rohr zugeführten Heizmediums durchführt.

## Revendications

1.  Procédé de régulation de température de sol végétal, comprenant :

    le contrôle de la température de la surface du sol par un régulateur de température posé dans le sol végétal, dans une zone d'irradiation de la lampe de croissance, et assurant au moins une fonction de chauffage ou de refroidissement, tout en irradiant le sol végétal par la lumière d'une lampe de croissance par le haut, dans lequel la température de la surface du sol est déterminée par une analyse de conduction thermique incluant des données météorologiques, notamment la température et l'humidité de l'air extérieur, ainsi qu'un plan d'irradiation et une quantité d'irradiation de la lampe de croissance comme conditions limites. Le régulateur de température est régulé de manière à ce que la température souterraine de la surface du sol devienne une température du sol cible, la conductivité thermique du sol étant prise en compte.

2.  Procédé de régulation de température de sol végétal selon la revendication 1, dans lequel

    les données météorologiques comprennent des mesures effectuées par un actinomètre, et
    lorsque le sol végétal est irradié par la lumière du luminaire de croissance depuis le dessus, dans un environnement d'irradiation solaire, la température de la surface du sol est régulée par le régulateur de température placé dans le sol végétal, dans la zone d'irradiation du luminaire de croissance.

3.  Procédé de régulation de température de sol végétal selon la revendication 1 ou 2, dans lequel

    le sol végétal est divisé en plusieurs zones de régulation, et le régulateur de température est disposé indépendamment dans chaque zone de régulation afin de permettre la régulation de la température de la surface du sol indépendamment pour chaque zone de régulation,
    le sol végétal est irradié par la lumière de la lampe de croissance selon le plan d'irradiation, de manière à commuter séquentiellement entre une zone irradiée et une zone non irradiée au sein de la zone de régulation, dans la régulation de la température de la zone irradiée, la régulation de la température est effectuée sur la base de l'analyse de conduction thermique incluant le plan d'irradiation et la quantité d'irradiation de la lampe de croissance comme condition limite, et
    dans la régulation de la température de la zone non irradiée, la régulation de la température est effectuée sur la base de l'analyse de conduction thermique, sans tenir compte du plan d'irradiation de la lampe de croissance comme condition limite, ou incluant le plan d'irradiation et la quantité d'irradiation de la lampe de croissance ayant été corrigée à une quantité d'irradiation inférieure à la quantité d'irradiation dans la zone d'irradiation comme condition limite.

4.  Procédé de régulation de température de sol végétal selon l'une des revendications précédentes, dans lequel

jusqu'à l'écoulement d'un temps prédéterminé depuis le début de l'irradiation de la lampe de croissance, la régulation de la température est effectuée sur la base d'une analyse de conduction thermique qui n'inclut pas le plan d'irradiation ni la quantité d'irradiation de la lampe de croissance comme conditions limites, et
après l'écoulement du temps prédéterminé jusqu'à la fin de l'irradiation de la lampe de croissance, la régulation de la température est effectuée sur la base d'une analyse de conduction thermique qui inclut le plan d'irradiation et la quantité d'irradiation de la lampe de croissance comme conditions limites.

5. Procédé de régulation de température de sol végétal selon l'une des revendications précédentes, dans lequel le régulateur de température alimente un fluide chauffant dans un tuyau posé dans le sol végétal et régule la température du sol végétal en régulant le fluide chauffant alimentant le tuyau.

*FIG.1*

# FIG.2

# FIG.3

# FIG. 4

(CONTROL ROOM)

(WEATHER OBSERVATION INSTRUMENT)

40 — ACTINOMETER
43 — ANEMOMETER
41 — OUTSIDE AIR THERMOMETER
42 — OUTSIDE AIR HYGROMETER

9A(9B)

5 — THERMOCOUPLE 1
5 — THERMOCOUPLE 2
5 — THERMOCOUPLE 3
THERMOCOUPLE 4
THERMOCOUPLE 5

52        53

TO EACH ON/OFF VALVE

FOR I ZONE   FOR G ZONE   FOR E ZONE   FOR C ZONE   FOR A ZONE
FOR H ZONE   FOR F ZONE   FOR D ZONE   FOR B ZONE

# FIG. 5

32

33f      33e      33d      33c      33b      33a

TO F ZONE   TO E ZONE   TO D ZONE   TO C ZONE   TO B ZONE   TO A ZONE

30

31

# FIG.6

Ground surface

First layer

Observation point

Second layer

Source point

Third layer

# FIG. 7

# FIG. 8

# FIG. 9

EP 3 895 522 B1

**EP 3 895 522 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8196140 A
- JP 10048054 A
- JP 2002084888 A